# EUROPEAN PATENT APPLICATION

(11) **EP 4 095 111 A1**
(43) Date of publication of application: **30.11.2022**
(21) Application number: 21176017.8
(22) Date of filing: 26.05.2021
(51) Int. Cl.: C04B 28/10, C04B 28/18, C04B 40/02, B28B 11/24

(54) **CALCIUM-SILICATE BRICKS**

(71) Applicant: HeidelbergCement AG, 69120 Heidelberg (DE)
(72) Inventor: Skocek, Jan, 69151 Neckargemünd (DE); Zajac, Maciej, 69126 Heidelberg (DE); Bullerjahn, Frank, 69181 Leimen (DE); Bolte, Gerd, 69190 Walldorf (DE)
(74) Representative: Zellentin & Partner mbB Patentanwälte

(57) **Abstract**

Method for manufacturing calcium-silicate bricks comprising providing a calcium source, a silicate source and water, forming the raw mass into a moist brick, and curing the moist brick with steam at a temperature from 101 to 250 °C and an absolute pressure from 1 to 25 bar, wherein waste concrete material, especially recycled concrete fines and paste covered aggregate from discarded concrete and cleaning concreting equipment, is used as at least part of the calcium source or of the calcium source and the silicate source.

## Description

The present invention relates to a method for manufacturing calcium-silicate bricks using waste concrete materials.

Calcium-silicate bricks, also called sand lime bricks, have been known and used since the nineteenth century. Strictly speaking the term brick denotes small building blocks made from clay. However, in practice and herein the term brick is used to cover all such comparably small blocks formed and cured, often chemically cured, regardless of the raw materials. Types, materials, and sizes vary widely. Bricks can be categorized by the raw material, the forming method, the size and the fact whether they are burnt. Typical examples are mudbricks obtained by forming and drying a mass, fired bricks made by forming and burning a mass, and concrete bricks made by forming a concrete paste and chemical reaction (hydration) to harden the paste. Calcium-silicate brick denotes a brick in which calcium-silicate-hydrates, such as but not limited to, tobermorite are responsible for binding, in contrast to clay bricks using clay for binding.

The manufacturing of calcium-silicate bricks is well known. Basically, silicate sand - or other siliceous materials - as silicate source is mixed with lime - either burnt or slaked lime can be used - as calcium source, and water, the obtained raw mass is formed, typically pressed, and then cured with steam. Calcium and silicate form calcium-silicate-hydrates (C-S-H) in a hydraulic reaction, the C-S-H building a matrix binding the particles together into a hardened structure. As is common for technical materials the raw materials usually contain impurities. These can take part in the hardening reaction or remain inert. Specifically, instead of only silicon the silicate source often also contains aluminium so that besides calcium-silicate-hydrates also calcium-silicate-aluminate-hydrates and calcium-aluminate-hydrates form.

During the long and successful use many proposals for improvement of the bricks with respect to the composition of the raw mass and the manufacturing conditions have been made. Among those proposals are a use of plasticizer, see e.g. EP 2 298 711 B1, an additional curing with CO₂ as in US 851,406 A, DE 1 047 104 C, EP 85 910 A1 and many others, as well as replacing at least a part of the sand with fly ash, DE 22 27 001 B, ground gramulated blast furnace slag, articles N. Arabi "Granulated slag based autoclaved sand-lime-bricks" found at: https://www.researchgate.net/publication/336140904 and S. Malhotra et al. "Development of bricks from gramulated blast furnace slag" found at: http://nopr. niscair.res.in/bitstream/123456789/29830/1/IJEMS%202(2)%2080-82.pdf and the abstract of O. Surul et al. "Recycle of ground granulated blast furnace slag and fly ash on eco-friendly brick production" found at: https://www.tandfonline.com/ doi/abs/10.1080/19648189.2020.1731714?journalCode=tece20, aerated concrete particles, DE 36 37 753 A1, or greywacke, DE 35 02 656 A1. In DE 35 02 656 A1 it is further proposed to use greywacke and used sand, especially spent foundry sand, or only used sand.

Compared to other building blocks like fired clay bricks and concrete bricks the environmental impact of calcium-silicate bricks is lower both in terms of energy demand and natural resources. However, calcium oxide is the key substance responsible for the excellent binding and hardening properties of calcium-silicate bricks. On the earth surface, calcium oxide is not stable and converts to calcium carbonate, which is hence its main source for industrial applications such as cement and lime production. Gaining calcium oxide from calcium carbonates requires calcination, which releases the CO₂ bound. These so-called process emissions are difficult to abate as no large-scale calcium carbonate alternative is available and CO₂ capturing and storage or utilization are not yet available at reasonable costs. The previously mentioned proposals for improvement are not able to solve the problem of CO₂ emission associated with calcination.

It was now surprisingly found that calcium oxide and calcium hydroxide in calcium-silicate brick manufacturing can be efficiently replaced by waste concrete materials rich in recycled concrete paste (RCP). One ubiquitously available source for RCP is the fine fraction from demolished concrete recycling which is rich in cement hydrates and fine aggregate. Thus, it already contains a calcium source and a silicate source. Other sources for RCP are residues from concreting and from cleaning equipment used for concreting.

Therefore, the above problem is solved by using waste concrete material, especially recycled concrete fines and paste covered aggregate from discarded concrete and RCP from cleaning concreting equipment, as calcium source for manufacturing calcium-silicate bricks by providing a raw mass comprising a calcium source, a silicate source and water, with the waste concrete material constituting at least a part of the calcium source or of the calcium and the silicate source, forming the raw mass into a moist brick, and curing the moist brick with steam at a temperature from 101 to 250 °C and an absolute pressure from 1 to 25 bar. The object is also achieved by a method for manufacturing calcium-silicate bricks comprising providing a raw mass comprising a calcium source, a silicate source and water, with the waste concrete material constituting at least a part of the calcium source or of the calcium and the silicate source, forming the raw mass into a moist brick, and curing the moist brick with steam at a temperature from 101 to 250 °C and an absolute pressure from 1 to 25 bar.

Using recycled concrete paste, such as but not limited to recycled concrete fines and paste-covered recycled aggregates, and sand as the main binding material in calcium-silicate bricks production enables a complete elimination or at least a substantial reduction of the CaO needed, as these waste concrete materials provide hydrothermally-reactive calcium. Thereby, RCP can constitute a part of or preferably all of the needed calcium source. Advantageously, the waste concrete material also provides reactive alumino-silicates which can form part or all of the silicate source, depending on how much aggregate is contained in the waste concrete material.

The term waste concrete material designates waste materials containing hardened cement paste. Thus, it can derive from demolition of concrete structures or be discarded concrete, but it can also derive from or be discarded other cement containing building materials like mortar, plaster, screed etc. where cement is used as binding agent. Such building materials are designated hydraulic building materials herein. The cement having been used to make the concrete (or mortar, plaster or other hydraulic building material form which the waste concrete material is obtained) can be any cement, preferred and most common are standard cements as defined in e.g. DIN EN 197-1. However, other cements like calcium aluminate cements, calcium sulfoaluminate cements, belite cements obtained from hydrothermal treatment and tempering or reactive grinding, geopolymer binders, super sulphated cements, and other special binders are perfectly possible. The important component of the waste concrete material is calcium in the form of silicate and/or aluminate hydrates.

Herein, RCP means hardened cement paste and is a fine material mainly composed of cement hydrates and some other components of the hydraulic building material as well as potentially unreacted cement. RCP typically has a Ca/Si molar ratio from 0.2 - 1.5 excluding any aggregate present, and usually a D₉₀ ≤ 500 µm, often ≤ 250 µm, more often ≤ 125 µm. RCP can be obtained as the finest fraction from concrete recycling or from washing concreting equipment, for example. Paste covered aggegrate is essentially an intermediate fraction from crushed concrete. Typically, it has a D₉₀ ≤ 16 mm, often ≤ 8 mm, more often ≤ 4 mm. The molar Ca/Si ratio usually ranges froom 0.025 to 0.15.

The first step of the use and method according to the invention is providing a raw mass comprising a waste concrete material containing hardened cement paste as at least a part of the calcium source.

In one embodiment, the waste concrete is derived from demolished concrete structures like buildings, bridges, road surfaces etc. As is known per se, the concrete demolition waste is crushed and possibly ground. If needed, foreign materials like wood, plastic and metal are removed, at least most of them. The crushed and optionally ground material is then separated based on size into recycled concrete aggregate (RCA) and recycled concrete fines (RCF). RCA is the coarser fraction and contains most of the aggregate, RCF contains mainly the hardened paste and fine aggregate. Typically, RCF contains mainly hydrates and sand, up to 50 wt.-% or even more sand can be present. The Ca/Si molar ratio normally ranges from 0.05 to 0.3 excluding any aggregate present. Usually, RCF has a D₉₀ ≤ 2 mm, often ≤ 1 mm, more often ≤ 500 µm. Depending on the separation method and conditions applied, the hardened paste can be detached more or less from the aggregate during providing of the RCF. Both finer crushing, optionally grinding, as well as applying attrition force in a carbon dioxide containing atmosphere can enhance detaching the paste from the aggregate. RCF from demolished concrete structures is a preferred calcium source according to the invention. Since it also constitutes a silicate source the raw mass can often be provided by only adding water or water and a small amount of additional calcium source or of additional silicate source.

In another embodiment the waste concrete material is derived from residues from concreting and/or from cleaning concreting equipment. Concrete and also mortar are frequently made in larger amounts than needed to avoid having not enough for a given building step. Also, it occurs that delays are so long that a batch of concrete or mortar cannot be used as planned and has to be discarded. Further, mixing devices, tools, moulds, etc. having been used to make and/or place the paste have to be cleaned. This is usually accomplished by rinsing with water as long as the adhering residues are not fully hardened, i.e. have had only hours to hydrate. Solid residues can be utilized in the same way as concrete demolition waste, i.e. they can be crushed and/or ground, possibly in the presence of carbon dioxide, to obtain RCP or RCF. Liquid residues typically need to be concentrated in solids, maybe dried, to obtain an RCP or RCF slurry or dry RCP/RCF. The aggregate content in liquid residues is normally low, typically only fine aggregate is present, if at all. Suitable devices to remove water are e.g. filters. RCP and RCF from residues from concreting and/or from cleaning concreting equipment is a preferred calcium source according to the invention. Since it also constitutes a silicate source and often contains water it can be directly used as raw mass. Of course, when the calcium:silicate ratio is not ideal or there is too much or not enough water the composition will be optimized by adding an additional calcium source or silicate source and/or adding or removing water.

The waste concrete material can also be a mixture of materials, especially of the described materials. For example, RCF from concrete demolition can be mixed with RCP slurry from washing concreting equipment to provide a raw mass with the desired water content.

In order to allow a fast curing reaction the fineness of the waste concrete material is preferably adjusted to a D₉₀ ≤ 500 µm, more preferred D₉₀ ≤ 200 µm, determined by laser granulometry. The overall mixture needs to be coarse to enable efficient forming and to provide green strength of the moist brick, but the calcium source can be as fine as practically needed. The only limit for fineness of the calcium source is the cost to grind fine and to handle the very fine material. As a compromise, a D₁₀ of the overall mixture should be above 0.25 µm. The Rosin Rammler Parameter (slope) n can vary from 0.6 - 1.4, and preferably from 0.7 to 1.2.

Usually, the fine aggregate and the silicate released from the waste concrete material suffice as the silicate source needed for curing. But just as for calcium-silicate bricks made according to the prior art a major part of the brick mass can be inert during curing and be constituted by aggregate and/or fillers of arbitrary kind. For example, but not exclusively, sand, lightweight aggregate, heavy aggregate, synthetic aggregate, recycled aggregate, recycled bricks, recycled sand-lime bricks and mixtures of two or more thereof can be present in the raw mass. The sand is usually composed of quartz and/or aluminosilicates and of suitable granulometry to achieve a desired dry consistency. Fillers like rock flour, fibers, and even asbestos can be included.

It is possible but not preferred to add further calcium containing materials, such as, but not limited to, portlandite, CaO, hydraulic cement, cement kiln dust and bypass dust, slags including steel slags, fly ashes or other materials characterized by a suitable composition.

It is also possible to add further silicate sources, such as, but not limited to, fly ash, bottom ash, natural pozzolans, waste glass and mixtures thereof. Fly ash and bottom ash can come from industrial manufacturing processes and/or power plants. Natural pozzolans are e.g. volcanic ashes, pumice, lava solidified with high amount of glassy phase, trass, burnt oil shale, calcined clay. Silica fume and fumed silica are also possible.

The waste concrete material is mixed with water and the other desired components, if any, to provide the raw mass. For waste concrete material already containing water, the water content is adjusted and any desired further components are added. Adjusting water content can be accomplished by adding water, removing water and mixing with further waste concrete materials and/or components having another water content, e.g. one or more dry waste concrete materials or components. The amount of water usually ranges from 1 to 10 wt.-% of the total mass, but up to 25 wt.-% is possible, especially when CaO is added and needs to be slaked.

The raw mass should have a bulkCa:Si weight ratio from 1:2 to 1:15, preferably from 1:3 to 1:10, most preferred from 1:4 to 1:8 for waste concrete materials with primarily siliceous aggregates, and from 1:0.5 to 1:8, preferably from 1:1 to 1:6, most preferred from 1:2 to 1:4 for waste concrete materials with aluminosilicate aggregates. Only non-carbonated Ca is taken into account for the ratios above and complete Si content of the raw mass. In RCF and RCP from concreting residues such a ratio is usually already present. The term essentially siliceous aggregate means that at least 50 wt.-%, preferably at least 80 wt.-%, of the aggregate in the raw mass are silicates, and essentially aluminosilicate aggregate designates raw masses wherein at least 50 wt.%, preferably at least 80 wt.-% of the aggregate are aluminosilicates.

Besides calcium, silica and alumina, up to 25 wt.-% of other components, such as but not limited to one or more of iron oxide, magnesium oxide, alkali oxide, sulfate, phosphor, titanium, fluorite, manganese, and chloride, can be present calculated as oxides on an loi-free basis (950 ºC). These components are coming from the hardened cement as well as from recycled sand, aggregates or other natural or manufactured materials used to prepare the initial mixture for making the concrete.

Next, the raw mass is formed into bricks. Forming can be accomplished with the known devices. Typically, the raw mass is obtained by mixing and then transferred into moulds with the desired size or extruded and cut to size. As known the brick can be designed to have holes, ridges, back tapers and many more adapted to the intended use or be just a rectangular block. Usually, the raw mass is compressed inside the mould or during extrusion. Generally, compressing pressures from 0.01 MPa (e.g. compression only by the own weight of the mass, i.e. the hydrostatic pressure) to 150 MPa are useful, preferably from 1 MPa to 25 MPa, depending on the particle size distributuion and water content of the raw mass, and also on particle shapes, their targeted properties and the production process.

Forming provides a moist brick, which can be handled for transferring into an autoclave for curing. Compared to prior art proposals where RCF is used as starting material for making belite binders, supplementary cementitious materials (SCM) with enhanced reactivity or filler/raw material for binders the amount of water in the moist brick is much lower. In other words, forming and the usual compressing results in a solid body to be cured by autoclaving, whereas the starting material for making belite binders, SCM etc. enters the autoclave as a liquid.

Curing is accomplished by autoclaving as for conventional sand lime bricks. The autoclave process is conducted in the respective devices at a temperature from 101 to 250 °C and an absolute pressure from about 1 to about 25 bar. The curing time depends on the density and size of the moist bricks. Typical sizes are building blocks having a length corresponding to twice the width plus one planned mortar joint (e.g. 12 mm or 1-3 mm) and a height from e.g. half the width to a bit more than the width, with the length ranging from 20 to 25 cm. Of course, the bricks can have other sizes, also with other aspect ratios, including rather flat elements like plates and panels. The blocks can be solid, frogged, perforated, cellular, and hollow. Furthermore, curved surfaces and round elements like pipes and columns are possible as well as complicated shapes for plant containers and design objects. Typically, curing needs from 1 to 48 hours. Preferably, the temperature ranges from 180 to 200 °C. The pressure is preferably adjusted to range from 10 to 16 bar. Usually, the autoclave contains a saturated steam atmosphere, so the minimum temperature is 101 °C and 1 bar. Under the preferred conditions mentioned above, curing is typically completed within 2 to 10 hours, often within 3 to 5 hours. Suitable autoclaves are well known and commercially available, see e.g. https://www.wkb-systems.com/en/products/sand-lime-bricks-production/autoclaving.html. Once the curing is completed, the calcium-silicate bricks can be removed from the autoclave and are ready for use.

As is known the bricks obtained by autoclaving can also be increased in hardness by reacting portlandite remaining after steam curing with CO₂. This optional carbonation process can be conducted directly after the autoclaving step in the autoclave. Alternatively, the brick can be removed from the autoclave and placed into a suitable chamber for carbonation. Carbonation is carried out by exposing the bricks to a carbon dioxide containing atmosphere, either batchwise or in a continuous process. For continuous processing the bricks can be placed e.g. onto a belt that moves through a chamber with a carbon dioxide atmosphere. The CO₂ concentration in the carbon dioxide containing atmosphere can range from 5 to 100 Vol.-%. The duration ranges from 15 min. to 48 hours and is adapted to the CO₂ concentration. For higher CO₂ concentration the time is shorter. The temperature during carbonation can range from 20 to 250 °C and the pressure from atmospheric to 35 bar. A carbonation improves the surface properties, mineralizes additional CO₂ and minimizes the risk of efflorescence.

The obtained calcium-silicate bricks, either with or without an additional carbonation hardening, show the known properties, i.e. they have a high density allowing them to bear high loads, are environmentally compatible due to their ability to regulate moisture and store heat, provide good sound insulation and are fire proof and frost resistant. Their high heat transmission can easily be counteracted by isolation. The surface design can be chosen as desired, e.g. smooth or dabbed, also depending on whether the surface remains visible or not.

The main advantages of the use and method according to the invention are:
- Significant reduction of CO₂-intensive CaO or portlandite
- Utilization of wastes/by-products - Circular economy
- Lowering the environmental footprint of the construction industry

The invention will be illustrated further with reference to the attached figures, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

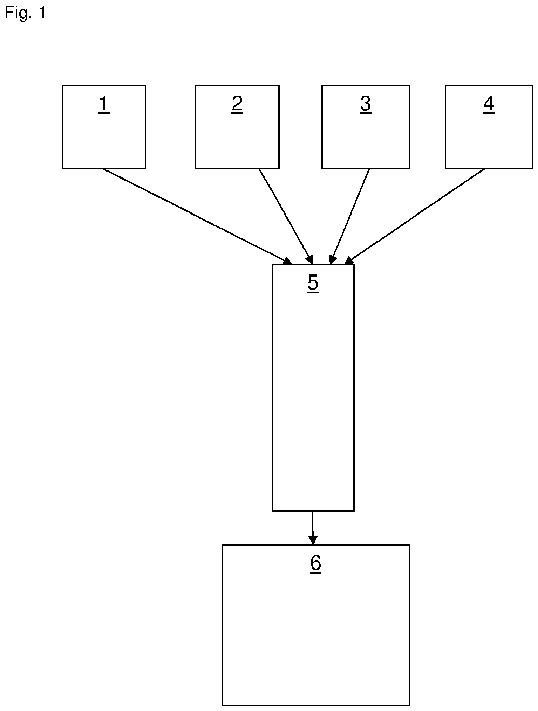

Fig. 1 shows a process scheme for an embodiment of the method according to the invention. In the first step, waste concrete material, CaO, and sand are provided in storage facilities 1, 2, and 3. The waste concrete materials can have compositions such as those shown in table 1. Raw masses are made from RCF 1 by adding water and optionally CaO and/or silicate sand as listed in table 2. The sand has a particle size distribution of D₉₀ = 1.2 mm, D₅₀ = 0.7 mm, and D₁₀ = 0.2 mm. Part of the water might be introduced by the sand or RCF as their moisture.

**Table 1**

| | **RCF 1** | **RCF 2** | **RCF 3** | **RCF 4** |
|---|---|---|---|---|
| chemical composition [wt-%] | | | | |
| LOI | 17.98 | 21.59 | 12.23 | 7.89 |
| SiO₂ | 43.02 | 43.63 | 54.72 | 74.15 |
| Al₂O₃ | 6.38 | 5.70 | 6.32 | 3.64 |
| Fe₂O₃ | 3.02 | 2.74 | 2.36 | 1.43 |
| CaO | 24.39 | 21.51 | 18.29 | 10.44 |
| MgO | 1.39 | 1.22 | 1.81 | 0.90 |
| K₂O | 0.80 | 0.76 | 1.00 | 0.77 |
| Na₂O | 0.35 | 0.32 | 0.42 | 0.28 |
| SO₃ | 1.21 | 1.07 | 1.28 | 0.69 |

| minerological composition [wt.-%] | | | | |
|---|---|---|---|---|
| Quartz | 28.3 | 28.7 | 39.1 | 58.4 |
| Calcite | 13.9 | 13.6 | 6.2 | 2.7 |
| Dolomite | 2.4 | 1.7 | - | - |

**Table 2**

| sample | Components (wt.-%, 105 °C dry basis) | Ca:Si mass ratio |
|---|---|---|
| 0 | 90 % RCF 1 + 0 % CaO + 10 % water + 0 % sand | 1:1.7 |
| 1 | 65 % RCF 1 + 1 % CaO + 12 % water + 22 % sand | 1:3.6 |
| 2 | 46 % RCF 1 + 3 % CaO + 16 % water+ 35 % sand | 1:6 |
| 3 | 24% RCF 1 + 0% CaO + 6 % water+ 70 % sand | 1:18 |
| 4 | 75 % RCF 1 + 0 % CaO+ 8 % water+ 17 % sand | 1:3 |
| 5 | 48 % RCF 1 + 0 % CaO+ 15 % water+ 37 % sand | 1:6 |
| 6 | 39 % RCF 1 + 0 % CaO+ 10 % water+ 51 % sand | 1:9 |

The raw masses are mixed inside an extruder 5 and the mass extruded as strand with 11.5 x 7.1 cm. The strand is cut each 24 cm to provide the moist bricks. These are then transferred into an autoclave 6 and cured at 200 °C and 4 bar pressure within 4 h. The obtained bricks are withdrawn from the autoclave 6 and stored until use.

### List of reference numbers

- 1: waste concrete material storage
- 2: CaO storage
- 3: sand silo
- 4: water supply
- 5: extruder
- 6: autoclave

## Claims

1. Use of waste concrete material for manufacturing calcium-silicate bricks by providing a raw mass comprising a calcium source, a silicate source and water, with the waste concrete material constituting at least a part of the calcium source or of the calcium and the silicate source, forming the raw mass into a moist brick, and curing the moist brick with steam at a temperature from 101 to 250 °C and an absolute pressure from 1 to 25 bar.

2. Method for manufacturing calcium-silicate bricks comprising providing a raw mass comprising a calcium source, a silicate source and water, forming the raw mass and curing the formed raw mass with steam at a temperature from 101 to 250 °C and an absolute pressure from 1 to 25 bar, wherein waste concrete material is used as at least part of the calcium source or of the calcium source and the silicate source.

3. Use according to claim 1 or method according to claim 2, wherein the waste concrete material is selected from recycled concrete fines, discarded hydraulic building material, especially concrete or mortar, and slurry from cleaning concreting equipment.

4. Use or method according to one of the preceding claims, wherein the raw mass is adjusted to a D₉₀ ≤ 500 µm, preferably a D₉₀ ≤ 200 µm, determined by laser granulometry, preferably with a D₁₀ ≤ 0.25 µm,
and/or to a Rosin Rammler Parameter n from 0.6 - 1.4, preferably from 0.7 to 1.2.

5. Use or method according to one of the preceding claims, wherein aggregate and/or fillers are added to the raw mass, preferably aggregate selected from sand, lightweight aggregate, heavy aggregate, synthetic aggregate, recycled aggregate, and mixtures of two or more thereof and/or fillers selected from rock flour, fibers, asbestos, and mixtures of two or more thereof.

6. Use or method according to one of the preceding claims, wherein further calcium containing materials, preferably selected from portlandite, CaO, and hydraulic cement, are added to the raw mass.

7. Use or method according to one of the preceding claims, wherein the raw mass is formed by pressing into a mould or extrusion, preferably using a hydrostatic or compressing pressure from 0.01 to 150 MPa, preferably compressing pressure from 1 to 25 MPa.

8. Use or method according to one of the preceding claims, wherein further silicate sources, preferably selected from fly ash, bottom ash, natural pozzolans, waste glass, silica fume, fumed silica and mixtures of two or more thereof, are added to the raw mass.

9. Use or method according to one of the preceding claims, wherein a bulk Ca:Si weight ratio in the raw mass is adjusted to range from 1:2 to 1:15, preferably from 1:3 to 1:10, most preferred from 1:4 to 1:8, when essentially siliceous aggregate is contained and from 1:0.5 to 1:8, preferably from 1:1 to 1:6, most preferred from 1:2 to 1:4, when essentially aluminosilicate aggregate is contained.

10. Use or method according to one of the preceding claims, wherein the amount of water in the raw mass is adjusted to range from 1 to 25 wt.-% of the total mass, preferably from 1 to 10 wt.-%.

11. Use or method according to one of the preceding claims, wherein steam curing is carried out for 1 to 48 hours, preferably for 2 to 10 hours, most preferred for 3 to 5 hours.

12. Use or method according to one of the preceding claims, wherein the temperature during curing is adjusted to range from 180 to 200 °C, and/or the pressure is adjusted to range from 10 to 16 bar.

13. Use or method according to one of the preceding claims, wherein a carbonation process is conducted after the steam curing.

14. Use or method according to claim 13, wherein carbonation is conducted with a CO₂ concentration from 5 to 100 Vol.-%, and/or for 15 min. to 48 hours and/or at a temperature from 20 to 250 °C, and/or a pressure from atmospheric to 35 bar.

15. Use or method according to one of the preceding claims, wherein the bricks have a length corresponding to twice the width plus one planned mortar joint (e.g. 12 mm or 1-3 mm) and a height from half the width to a bit more than the width, with the length ranging from 20 to 25 cm, or the bricks are flat elements, like plates and panels, wherein the bricks are solid, frogged, perforated, cellular, or hollow, or the bricks have curved surfaces or are round elements like pipes and columns or have complicated shapes for a use as plant containers or design objects.
